Europäisches Patentamt

European Patent Office

Office européen des brevets

(11) Veröffentlichungsnummer: **0 103 724 B1**

(12) **EUROPÄISCHE PATENTSCHRIFT**

(45) Veröffentlichungstag der Patentschrift:
23.04.86

(21) Anmeldenummer: 83107720.1

(22) Anmeldetag: 05.08.83

(51) Int. Cl.⁴: **B 60 B 1/00**, B 60 B 21/10, B 60 C 5/16

(54) Luftbereiftes Fahrzeugrad für Fahrräder.

(30) Priorität: 20.09.82 DE 3234803

(43) Veröffentlichungstag der Anmeldung:
28.03.84 Patentblatt 84/13

(45) Bekanntmachung des Hinweises auf die Patenterteilung:
23.04.86 Patentblatt 86/17

(84) Benannte Vertragsstaaten:
AT CH DE FR GB IT LI NL

(56) Entgegenhaltungen:
DE - B - 1 002 210
FR - A - 1 042 864
FR - A - 2 154 790
FR - A - 2 254 444
FR - A - 2 261 885
US - A - 2 198 978
US - A - 2 698 042
US - A - 3 709 561

(73) Patentinhaber: Continental Gummi-Werke Aktiengesellschaft, Königsworther Platz 1, D-3000 Hannover 1 (DE)

(72) Erfinder: Döring, Heinrich, Elsa-Brandström-Strasse 15, D-3548 Arolsen (DE)
Erfinder: Heuer, Herbert, Ing. (grad.), Marker Breite 31, D-3540 Korbach (DE)
Erfinder: Kunz, Manfred, Dipl.-Ing., In der Bärmeke 1, D-3542 Willingen (DE)
Erfinder: Ritensek, Rudolf, Schwelmer Strasse 55, D-3540 Korbach (DE)

## Beschreibung

Die Erfindung bezieht sich auf luftbereifte Räder für Fahrräder, mit einer Radfelge, deren den Reifen radial abstützenden Wulstflächen von den Felgenhörnern aus unter einem spitzen Winkel gegen die Axialrichtung kegelig eingezogen und auf der Innenseite von einer nach einem vertieften mittleren Felgenbereich überleitenden umlaufenden höckerartigen Erhebung begrenzt sind.

Wenn Fahrräder mit schlauchlosen Luftreifen ausgerüstet sind, bereitet das Aufziehen der Reifen auf die Felge erhebliche Schwierigkeiten, weil — anders als etwa im Vergleich zu Kraftfahrzeugreifen — die Reifen in aller Regel von Hand aufgepumpt werden und es daher nicht möglich ist, das luftdichte Anliegen der beiden Reifenwulste an den Schultern der Radfelge schon in der Anfangsphase des Montiervorganges durch einen einleitenden Druckluftstoss zumindest annähernd zu sichern. Es ist demgemäss Aufgabe der Erfindung, die Reifenmontage zu vereinfachen, ohne damit andererseits Einbussen des zuverlässigen Reifensitzes gegen Abwerfen unter der Einwirkung starker seitlicher Stossbeanspruchungen hinnehmen zu müssen. Eine besondere Verschärfung erfährt die Aufgabenstellung noch durch den in der Praxis schon seit langem bestehenden Wunsch nach wahlweiser Benutzung sowohl schlauchloser Reifen als auch Reifen mit eingelegten Luftschläuchen auf ein und derselben Radfelge.

Nach der Erfindung zeichnen sich Räder der eingangs geschilderten Gattung durch die ausschliessliche Kombination der nachstehenden Merkmale aus:

a. Die dem anliegenden Reifenwulst zugekehrte Aussenkante der höckerartigen Erhebung verläuft geradlinig unter einem spitzen Winkel von einer Grössenordnung zwischen 20° und 40° gegen die Radialrichtung nach innen geneigt;

b. die dem anliegenden Reifenwulst abgekehrte Innenkante der höckerartigen Erhebung verläuft gekrümmt nach der Linie eines Kreisbogenabschnittes mit einem Radius in einer der axialen Breite des Reifenwulstes entsprechenden Grössenordnung;

c. der grösste Durchmesser der höckerartigen Erhebung ist im wesentlichen gleich dem grössten Durchmesser der Wulstsitzfläche im Übergangsbereich zu dem Felgenhorn bemessen.

Die neuartige Gestaltung der Radfelge bietet überraschende Vorteile für Fahrrad-Räder. Die umlaufende höckerartige Erhebung sichert einen auch gegen starke Seitenkräfte festen und luftdichten Sitz der Reifen auf der Felge, während sie andererseits aufgrund ihrer spezifischen Formgebung mit dem Tiefbett zugekehrter kreisbogenförmiger Krümmung ein leichtes Aufgleiten der Reifen im Verlauf der Montage ermöglicht und darüber hinaus günstige Voraussetzungen für eine frühzeitige Kontaktaufnahme der Reifenwulste und damit für ein problemloses Aufblasen mit einer Handpumpe schafft. Die Abstimmung des grössten Durchmessers der höckerartigen Erhebung auf den grössten Felgen-Aussendurchmesser ermöglicht darüber hinaus auch die Montage von Reifen mit Schläuchen, so dass je nach Bedarf oder nach den Umständen ohne Schwierigkeiten zwischen schlauchlosen und Reifen mit Schlauch gewechselt werden kann.

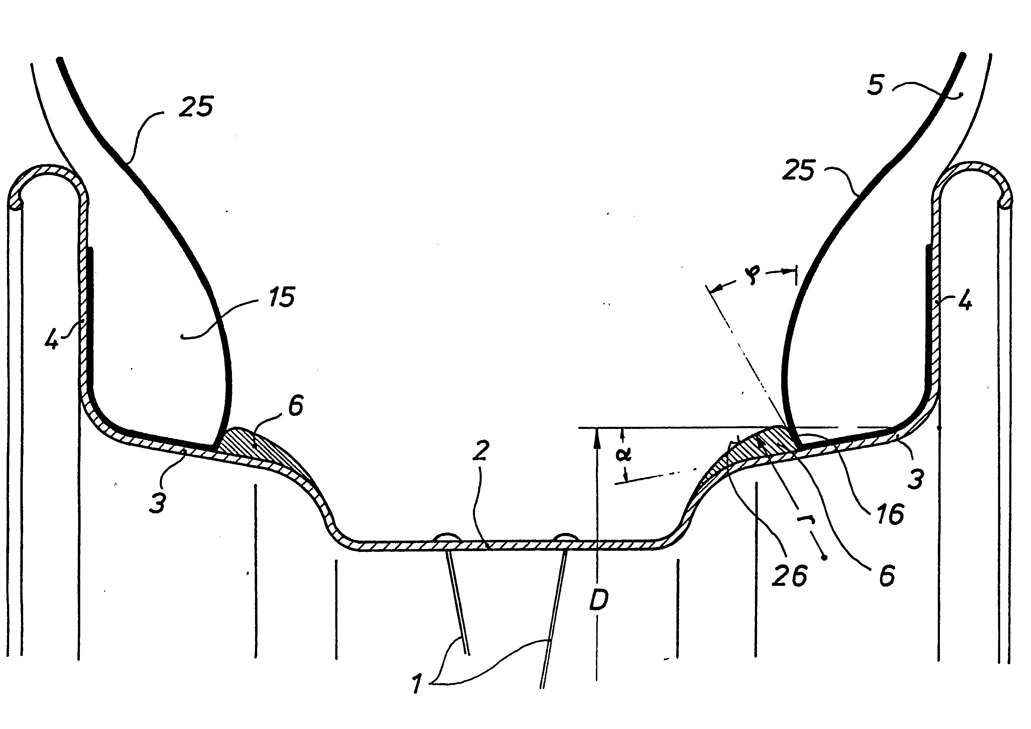

Die Erfindung ist anhand der schematischen Darstellung eines Ausführungsbeispieles in der Zeichnung verdeutlicht. Die einzige Figur der Zeichnung zeigt eine Fahrradfelge im Querschnitt in stark vergrössertem Massstab.

Die Felge ist als einteiliges Formstück beispielsweise aus Leichtmetall oder einem hochfesten Kunststoff hergestellt und mit Hilfe druckdicht eingesetzter Speichen 1 in an sich bekannter Weise an einer nicht gezeichneten Nabe angebracht. Sie ist in symmetrischer Gestaltung mit von einem vertieften Mittenbereich 2 über Abrundungsbogen angesetzten nach aussen schräg ansteigenden Wulstflächen 3 und beiderseits als Abschluss dienenden Felgenhörnern 4 ausgebildet. Die Wulstsitzflächen 3 verlaufen geradlinig unter einem Winkel α von etwa 10° gegen die Axialrichtung und stützen die Wulste 15 des nur teilstückweise angedeuteten Luftreifens 5 radial ab, während die im wesentlichen in Radialebenen ausgerichteten Felgenhörner 4 den Reifen axial festlegen. Der Reifen 5 selbst ist in dem gezeichneten Ausführungsbeispiel zur Verwendung ohne zusätzlichen, getrennten Innenschlauch gedacht und mit Rücksicht hierauf mit einer vorzugsweise ganzflächig aufgehafteten, um die Wulste 15 nach aussen herumgezogenen luftdichten Innenauskleidung 25 z.B. aus einem Butylkautschuk oder einer Folie eines anderen geeigneten diffusionsfesten Kunststoffes versehen.

In den an den vertieften Mittenbereich 2 beiderseits angrenzenden Innenabschnitten der Wulstsitzflächen 3 ist die Felge mit höckerartigen Erhebungen oder Querschnittsvorsprüngen 6 ausgebildet. Die Erhebungen können nachträglich an der für sich hergestellten Felge beispielsweise durch Schweissen angebracht oder aber statt dessen auch von vornherein nach Art von Sicken angeformt werden. Ihre den Reifenwulsten 15 zugekehrte Aussenkante 16 ist in enger Anpassung an die Wulstkonturen vorwiegend geradlinig unter einem Winkel φ von etwa 30° gegen die Radialrichtung geneigt und geht über einen Abrundungsbogen in die nach einer Kreisbogenlinie gekrümmte Innenkante 26 über, wobei sich das Mass für den Krümmungsradius r der Kreisbogenlinie in einer etwa der Breite des Reifenwulstes 15 entsprechenden Grössenordnung bewegt. Als wichtige Bedingung im Rahmen der vorliegenden Erfindung gilt, dass der grösste Durchmesser D im Bereich des Übergangsbogens zwischen Aussen- und Innenkante 16 bzw. 26 der Erhebungen 6 gleich oder zumindest im wesentlichen gleich dem grössten Durchmesser der Wulstsitzflächen 3 ist. Die Erfüllung dieser Bedingung ermöglicht die Verwendung der neuartigen Felge mit schlauchlosen ebenso wie mit Schlauchreifen.

## Patentansprüche

1. Luftbereiftes Rad für Fahrräder, mit einer Radfelge, deren den Reifen radial abstützenden Wulstsitzflächen (3) von den Felgenhörnern (4) aus unter einem spitzen Winkel (α) gegen die Axialrichtung ke-

gelig eingezogen und auf der Innenseite von einer nach erinem vertieften mittleren Felgenbereich (2) überleitenden umlaufenden höckerartigen Erhebung (6) begrenzt sind, gekennzeichnet durch die ausschliessliche Kombination nachstehender Merkmale:

a. Die dem anliegenden Reifenwulst (15) zugekehrte Aussenkante (16) der höckerartigen Erhebung (6) verläuft geradlinig unter einem spitzen Winkel (φ) von einer Grössenordnung zwischen 20° und 40° gegen die Radialrichtung nach innen geneigt;

b. die dem anliegenden Reifenwulst abgekehrte Innenkante (26) der höckerartigen Erhebung (6) verläuft gekrümmt nach der Linie eines Kreisbogenabschnittes mit einem Radius (r) in einer der axialen Breite des Reifenwulstes (15) entsprechenden Grössenordnung;

c. der grösste Durchmesser (D) der höckerartigen Erhebung (6) ist im wesentlichen gleich dem grössten Durchmesser der Wulstsitzfläche (3) im Übergangsbereich zu dem Felgenhorn (4) bemessen.

2. Rad nach Anspruch 1, dadurch gekennzeichnet, dass die Wulstsitzflächen (3) der Radfelge unter einem Winkel (α) in einer Grössenordnung von etwa 10° gegen die Axialrichtung nach innen geneigt verlaufen.

3. Rad nach den Ansprüchen 1 und 2, dadurch gekennzeichnet, dass es mit einem mit einer luftdichten Innenauskleidung (25) versehenen schlauchlosen Luftreifen (5) ausgestattet ist.

## Claims

1. Wheel with a pneumatic tyre for bicycles, having a wheel rim, the bead seating surfaces (3) of which radially support the tyre and conically taper from the rim flanges (4) at an acute angle (α) relative to the axial direction, said surfaces being defined on the side by an encircling, hump-like raised portion (6) which extends towards a recessed, central rim region (2), characterised by the exclusive combination of the following features:

a) the outer edge (16) of the hump-like raised portion (6) facing towards the adjacent tyre bead (15) inclines inwardly rectilinearly at an acute angle (φ) of an order of magnitude of between 20° and 40° relative to the radial direction;

b) the inner edge (26) of the hump-like raised portion (6) remote from the adjacent tyre bead extends in a curved manner along the line of a circular arc portion having a radius (r) of an order of magnitude corresponding to the axial width of the tyre bead (15);

c) the maximum diameter (D) of the hump-like raised portion (6) is substantially identical to the maximum diameter of the bead seating surface (3) in the transitional region extending to the rim flange (4).

2. Wheel according to claim 1, characterised in that the bead seating surfaces (3) of the wheel rim incline inwardly at an angle (α) of an order of magnitude of approximately 10° relative to the axial direction.

3. Wheel according to claims 1 and 2, characterised in that it is fitted with a tubeless pneumatic tyre (5) provided with an air-tight inner lining (25).

## Revendications

1. Roue de cycle à pneumatique, avec une jante dont les faces (3) d'appui du talon soutenant radialement le pneumatique sont rabattues, à partir des rebords (4) de la jante, en cône et suivant un angle aigu (α) par rapport à la direction axiale, et limitées du côté intérieur par un bossage (6) circulaire se raccordant à une base centrale (2) surbaissée de la jante, ladite route étant caractérisée en ce que:

a) le bord extérieur (16) du bossage (6) en regard du talon (15) adjacent du pneumatique est rectiligne et incliné vers l'intérieur suivant un angle aigu (φ) compris entre 20° et 40° par rapport à la direction axiale;

b) le bord intérieur (26) du bossage (6) opposé au talon adjacent du pneumatique est courbe suivant un arc de cercle à rayon (r) de l'ordre de grandeur de la largeur axiale du talon (15) du pneumatique; et

c) le diamètre maximal (D) du bossage (6) est sensiblement égal au diamètre maximal de la face d'appui (3) du talon dans la zone de raccordement au rebord (4) de la jante.

2. Roue selon revendication 1, caractérisée en ce que les faces (3) d'appui du talon sur la jante sont inclinées vers l'intérieur suivant un angle (α) de l'ordre de 10° environ par rapport à la direction axiale.

3. Roue selon revendications 1 et 2, caractérisée en ce qu'elle est équipée d'un pneumatique (5) sans chambre, comprenant un revêtement intérieur (25) étanche à l'air.

0 103 724